# EUROPÄISCHE PATENTSCHRIFT

(11) **EP 1 849 851 B1**
(45) Veröffentlichungstag und Bekanntmachung des Hinweises auf die Patenterteilung: **13.04.2016**
(21) Anmeldenummer: 07106831.6
(22) Anmeldetag: 24.04.2007
(51) Int. Cl.: C10L 5/44

(54) **PELLETTIERANLAGE**
PELLETING FACILITY
INSTALLATION DE PAILLETAGE

(30) Priorität: 24.04.2006 AT 32906 U
(43) Veröffentlichungstag der Anmeldung: 31.10.2007
(73) Patentinhaber: Teccon Engineering GmbH, 9851 Lieserbrücke (AT)
(72) Erfinder: Kasmanhuber, Peter, A-9851 Lieserbrücke (AT)
(74) Vertreter: KLIMENT & HENHAPEL

(56) Entgegenhaltungen:
- EP-A1- 1 502 667
- US-A- 2 194 593
- US-A- 3 221 368
- US-A- 5 782 265
- US-A- 5 879 421

## Beschreibung

Die Erfindung bezieht sich auf eine Vorrichtung zur Herstellung von Holzpellets mit einer Aufgabestelle für zerkleinertes Holzgut, einem Vorbehälter zur Zwischenlagerung des zerkleinerten Holzgutes, einer Presse zur Erzeugung von Pellets aus dem zerkleinerten Holzgut, einem Kühler zum Abkühlen der gepressten Pellets, einem dem Kühler nachgeordneten Abgabestelle für die erzeugten Pellets, zumindest einer Entstaubungseinrichtung zur Trennung staubbehafteter Prozessluft in Feinstaub und Abluft sowie mit einer Zerkleinerungseinrichtung zur Zerkleinerung von Holzgut, gemäß dem Oberbegriff von Anspruch 1.

Vorrichtung dieser Art zur Herstellung von Holzpellets als Heizmaterial, im folgenden auch als Pelletieranlagen bezeichnet, finden aufgrund der Umweltfreundlichkeit des Heizmaterials und der vergleichsweise leichten und billigen Verfügbarkeit des Ausgangsmaterials, nämlich Abfällen aus holzverarbeitenden Betrieben wie etwa Säge- oder Hobelspänen, Hackschnitzel oder Holzschreddergut, zunehmende Verbreitung. Die Umweltbilanz des Brennstoffes Holzpellets wird auch dadurch verbessert, indem Vorrichtungen dieser Art in unmittelbarer Nähe zum Hersteller des Rohstoffes, wie etwa Säge- oder Hobelwerken, errichtet werden können, sodass größere Transportwege entfallen.

Allerdings sind bei der Entscheidung über den möglichen Bau einer Pelletieranlage auch wirtschaftliche Kriterien entscheidend, insbesondere sind die bei der Errichtung einer Pelletieranlage entstehenden Kosten zu berücksichtigen. Hierzu zählen Kosten für die Schaffung der notwendigen Gebäudeinfrastruktur wie Fundierungsarbeiten oder Hallenbau, sowie Kosten für den späteren Betrieb, zu denen auch Adaptierungs-, Erweiterungs- und Rückbauarbeiten zählen. Gemäß dem Stand der Technik sind diese Kosten aber noch unverhältnismäßig hoch, da jede Anlage für den jeweiligen Betreiber geplant und errichtet wird, wobei die entsprechenden Anlagenteile wie Presse, Kühler usw. individuell zusammengestellt werden. Zudem sind bereits errichtete Anlagen mitunter schwer an neue Erfordernisse wie etwa geänderte Verarbeitungsmengen adaptierbar, und zwar sowohl hinsichtlich einer Vergrößerung, als auch einer Verkleinerung der Anlage.

Aus der US 2194593 A ist eine Maschine zur Herstellung von Briketts aus Sägemehl bekannt, wobei die Maschine ein Rahmengerüst aufweist und wobei das Sägemehl mittels eines Beschickungstrichters zugeführt, mittels einer Kette weitertransportiert und mittels Rollen, die Klingen oder Wellen aufweisen, verdichtet wird.

Aus der EP 1502667 A1 ist eine Vorrichtung zur Brikettierung von Kommunalabfällen bzw. Hausmüll bekannt, welche Vorrichtung Elemente wie z.B. einen Kran, einen Trichter oder einen Drehofen umfasst, die auf einer Bodenplatte nebeneinander aufgestellt sind.

Es ist daher das Ziel der Erfindung, die oben genannten Nachteile zu vermeiden und eine Vorrichtung zur Herstellung von Holzpellets bereitzustellen, die einfach und preiswert in ihrer Errichtung sowie ihrem weiteren Betrieb, und zudem transportabel ist. Die erfindungsgemäße Vorrichtung soll dabei leicht an neue Erfordernisse, wie etwa geänderte Verarbeitungsmengen, adaptierbar sein. Diese Vorteile sollen insbesondere auch auf größere Anlagen mit einer Verarbeitungsleistung von über 1000 kg/h zutreffen,

Diese Ziele werden durch die Merkmale von Anspruch 1 verwirklicht. Anspruch 1 bezieht sich auf eine Vorrichtung zur Herstellung von Holzpellets mit einer Aufgabestelle für zerkleinertes Holzgut, einem Vorbehälter zur Zwischenlagerung des zerkleinerten Holzgutes, einer Presse zur Erzeugung von Pellets aus dem zerkleinerten Holzgut, einem Kühler zum Abkühlen der gepressten Pellets, einem dem Kühler nachgeordneten Abgabestelle für die erzeugten Pellets, zumindest einer Entstaubungseinrichtung zur Trennung staubbehafteter Prozessluft in Feinstaub und Abluft sowie mit einer Zerkleinerungseinrichtung zur Zerkleinerung von Holzgut. Erfindungsgemäß ist vorgesehen, dass ein Rahmengerüst mit am Rahmengerüst montierten Trageplatten oder -gitter zur Befestigung von Vorbehälter, Presse, Kühler und der zumindest einen Entstaubungseinrichtung in einer zueinander räumlich fixierten Lage vorgesehen sind, wobei am Rahmengerüst Verkleidungsplatten befestigbar sind und wobei das Rahmengerüst die an ihm befestigten Anlagenteile zumindest teilweise überragt, sodass sie durch die am Rahmengerüst befestigten Verkleidungsplatten abgedeckt werden können, und dass der Vorbehälter, die Presse, der Kühler und die zumindest eine Entstaubungseinrichtung durch entsprechendes Hantieren des Rahmengerüsts in ihrer räumlich zueinander fixierten Lage transportabel sind. Das Rahmengerüst stellt somit das Grundgerüst eines Gehäuses dar, in dem die für eine Pelletieranlage relevanten Anlagenteile ortsfest gehalten sind. Diese Anlagenteile sind somit durch entsprechendes Hantieren des Rahmens transportabel. Die Befestigbarkeit von Verkleidungsplatten am Rahmengerüst legt auch die Ausführung des Rahmengerüsts relativ zu den an ihm befestigten Anlagenteilen fest, insbesondere muss das Rahmengerüsts die an ihm befestigten Anlagenteile wie Vorbehälter, Presse oder Kühler zumindest teilweise übertragen, sodass sie durch die am Rahmengerüsts befestigten Verkleidungsplatten weitestgehend abgedeckt werden können. Das hat den Vorteil, dass die erfindungsgemäße Vorrichtung aufgrund der Verkleidung weitestgehend geschützt vor Witterungseinflüssen ist, und somit keine weitere Gebäudeinfrastruktur benötigt. Stattdessen ist die erfindungsgemäße Vorrichtung lediglich auf einem hierfür vorgesehenen, vorzugsweise betonierten Fundament auf- bzw. abzustellen.

Das Rahmengerüst und die an ihm befestigten Anlagenteile stellen somit ein transportables Produktionsmodul mit vorgegebener Verarbeitungsmenge dar, wobei bei Bedarf auch mehrere dieser Produktionsmodule kombiniert werden können, um die Verarbeitungsmenge auf diese Weise zu erhöhen, ohne die Anlagenteile eines Moduls in ihrer Dimensionierung zu verändern. Selbstverständlich kann bei einer zukünftig notwendigen Verkleinerung der Anlage auch ein Produktionsmodul entfernt werden, ohne den Betrieb der anderen Produktionsmodule zu stören.

Ist zusätzlich der Abgabestelle eine Abfüll- oder Absackeinrichtung für die erzeugten Pellets nachgeordnet, so kann gemäß Anspruch 2 auch die Abfüll- oder Absackeinrichtung in einem Modulrahmen gehalten sein, wobei der Modulrahmen mit dem Rahmengerüst verbindbar ist. Alternativ oder ergänzend zu einem solchen Modulrahmen kann gemäß Anspruch 3 auch vorgesehen sein, dass das Rahmengerüst mit einem Lagermodul zur Zwischenlagerung der erzeugten Pellets verbindbar ist. So kann etwa die im Modulrahmen gehaltene Abfüll- oder Absackeinrichtung zeitweise auch durch ein Lagermodul ersetzt werden, in dem die erzeugten Pellets zwischengelagert werden.

Insbesondere bei größeren Anlagen, etwa bei Verarbeitungsmengen von über 1000 kg/h, erweisen sich die Merkmale von Anspruch 4 als vorteilhaft. Anspruch 4 sieht vor, dass das Rahmengerüsts mit einem Stiegenmodul als Zugang zu den am Rahmengerüst montierten Trageplatten oder -gitter verbindbar ist. Dadurch kann einfacher Zugang zu allen Anlagenteilen für notwendige Wartungs- oder Überwachungsarbeiten gewährleistet werden.

Anspruch 5 sieht vor, dass die an den Trageplatten oder - gitter montierten Anlagenteile Vorbehälter, Presse, Kühler und die zumindest eine Entstaubungseinrichtung in ein elektrisches Netzwerk eingebunden sind, das über eine Schnittstelle von außerhalb des Rahmengerüst zugänglich ist. Durch diese Vorvernetzung aller Anlagenteile kann erreicht werden, dass die Anlage beim Betreiber über die Schnittstelle sofort in Betrieb genommen werden kann.

In einer erweiterten Ausführungsform können gemäß Anspruch 6 am Rahmengerüst auch zusätzliche Trageplatten oder -gitter zur Befestigung eines Siebes und der Zerkleinerungseinrichtung vorgesehen sein. Werden diese Ausführungsformen durch alle anderen, zur Pelletierung vorteilhafter Einrichtungen, wie einem Konditioneur und einem Reifebehälter, ergänzt, steht ein komplettes Produktionsmodul zur Verfügung, das mithilfe der Befestigung am Rähmengerüst in seiner Gesamtheit transportiert werden kann. Das Produktionsmodul stellt somit im bevorzugten Fall eine vollständig betriebsfertige Anlage dar, die lediglich durch optionale Module, wie jene für die Abfüll- oder Absackeinrichtung, dem Lagermodul oder dem Stiegenmodul, ergänzt werden kann. Ein solches Produktionsmodul lässt sich beim holzverarbeitenden Betrieb schnell und preisgünstig aufstellen, ohne dass zuerst kosten- und zeitintensiv Gebäudeinfrastruktür geschaffen werden muss.

Des Weiteren hat sich hinsichtlich der Prozessführung bei der Pelletierung gezeigt, dass die Temperatur und der Feuchtegehalt des über die Aufgabestelle der Pelletieranlage zugeführten Holzgutes, sowie der Feuchtegehalt des der Pelletspresse zugeführten Materials von entscheidender Bedeutung sind. Falls etwa der Feuchtegehalt des zugeführten Holzgutes zu hoch ist, ist durch einen vorhergehenden Trocknungsvorgang der Feuchtegehalt zu reduzieren. Außerdem ist es von Vorteil, wenn das Holzgut vor der Zufuhr in die Pelletieranlage angewärmt wird. Maßnahmen dieser Art vermindern allerdings die Energieeffizienz der Gesamtanlage. Zudem zeigen sich mitunter Schwierigkeiten hinsichtlich eines optimalen Betriebs der Zerkleinerungseinrichtung, etwa eine Hammermühle, da die bei der Zerkleinerung entstehende Wärme aufgrund einer ansonsten drohenden Überhitzung der Mühle abzuführen ist.

Zur Vermeidung dieser Nachteile und zur Sicherstellung erweiterter Prozessführungsmöglichkeiten, zusätzlich möglicher Maßnahmen zur Trocknung und Anwärmung des Holzgutes, sowie für einen optimierten Betrieb der Zerkleinerungseinrichtung, können die Merkmale der Ansprüche 7 bis 16 verwirklicht werden.

Anspruch 7 sieht dabei vor, dass eine Rückführung für die Abluft von der zumindest einen Entstaubungseinrichtung in die Aufgabestelle vorgesehen ist.

Ist etwa gemäß Anspruch 8 eine Entstaubungseinrichtung dem Kühler nachgeordnet und mit dem Kühler verbunden, so weist die entsprechende Abluft erhöhte Temperatur auf. Diese Abluft kann daher für eine Trocknung oder Anwärmung des der Abgabestelle zugeführten Holzgutes verwendet werden. Eine besonders vorteilhafte Realisierung dieser Maßnahme kann etwa mithilfe der Merkmale von Anspruch 9 bewerkstelligt werden, indem eine pneumatische Saugeinrichtung zwischen dem Kühler und der Entstaubungseinrichtung zum Transport der Prozessluft vom Kühler in die Entstaubungseinrichtung vorgesehen ist.

Alternativ oder zusätzlich kann auch gemäß Anspruch 10 eine Entstaubungseinrichtung zwischen der Transporteinrichtung und dem Vorbehälter angeordnet sein. Hierbei ist es gemäß Anspruch 11 vorteilhaft, wenn es sich bei der Transporteinrichtung um eine pneumatische Saugeinrichtung zum Transport der Prozessluft von der Aufgabestelle in die Entstaubungseinrichtung handelt, da auf diese Weise die von einer der Entstaubungseinrichtungen rückgeführte Abluft der von der Saugeinrichtung angesaugten Zuluft zur Abgabestelle zugemengt werden kann. Dabei ist es vorteilhaft, wenn gemäß Anspruch 12 Regeleinrichtungen wie etwa Ventile, Klappen oder Schieber, zur Regelung der der Aufgabestelle zugeführten Abluft vorgesehen sind.

Gemäß Anspruch 13 können etwa Zyklonenentstauber als Entstaubungseinrichtungen verwendet werden.

Die Zerkleinerungseinrichtung ist insbesondere in jenen Fällen vorteilhaft, wo auch Ausgangsmaterial mit unterschiedlicher Größenverteilung, das etwa gröbere Teile wie Kapstücke und dergleichen enthält, verarbeitet werden soll. Gemäß Anspruch 14 ist bei einer solchen Anlage vorgesehen, dass eine Rückführung für die Abluft von der zumindest einen Entstaubungseinrichtung in die Zerkleinerungseinrichtung vorgesehen ist. Dabei ist es vorteilhaft, wenn gemäß Anspruch 15 Regeleinrichtungen, wie etwa Ventile, Klappen oder Schieber, zur Regelung der der Zerkleinerungseinrichtung zugeführten Abluft vorgesehen sind.

Auch im Fall einer zusätzlichen Zerkleinerungsvorrichtung kann eine Entstaubungseinrichtung dem Kühler nachgeordnet und mit dem Kühler verbunden sein, wobei die höhere Temperatur der entsprechenden Abluft nutzbar wird. Eine besonders vorteilhafte Realisierung dieser Maßnahme kann wiederum bewerkstelligt werden, indem eine pneumatische Saugeinrichtung zwischen dem Kühler und der Entstaubungseinrichtung zum Transport der Prozessluft vom Kühler in die Entstaubungseinrichtung vorgesehen ist. Des Weiteren kann wiederum eine Entstaubungseinrichtung zwischen der Transporteinrichtung und dem Vorbehälter angeordnet sein. Dabei erweist es sich wiederum als vorteilhaft, wenn es sich bei der Transporteinrichtung um eine pneumatische Saugeinrichtung zum Transport der Prozessluft von der Aufgabestelle in die Entstaubungseinrichtung handelt, da auf diese Weise die von einer der Entstaubungseinrichtungen rückgeführte Abluft der von der Saugeinrichtung angesaugten Zuluft zur Abgabestelle zugemengt werden kann.

Zusätzlich kann auch bei einer Vorrichtung, die eine Zerkleinerungseinrichtung umfasst, vorgesehen sein, dass eine Rückführung für die Abluft von der zumindest einen Entstaubungseinrichtung in die Aufgabestelle vorgesehen ist. Die in diesem Fall vorgesehenen Regeleinrichtungen zur Regelung der der Aufgabestelle zugeführten Abluft ermöglichen eine präzisere Prozessführung. -Gemäß Anspruch 16 handelt es sich bei der Zerkleinerungseinrichtung um eine Hammermühle.

Die Erfindung wird im Folgenden anhand der beiliegenden Zeichnungen für eine beispielsweise Ausführung näher erläutert. Dabei zeigt die
Fig.1 eine schematische Darstellung einer Pelletieranlage gemäß dem Stand der Technik ohne Rückführung von Abluft,
Fig.2, eine schematische Anlagendarstellung der Ausführungsform einer erfindungsgemäßen Anlage mit einer Rückführung von Abluft,
Fig.3 eine weitere schematische Darstellung einer Ausführungsform gemäß der Fig.2,
Fig.4 eine Darstellung eines Rahmengerüsts zur Verwendung mit einer Ausführungsform der erfindungsgemäßen Vorrichtung,
Fig.5 eine Darstellung zur Illustration der Transportfähigkeit einer Ausführungsform der erfindungsgemäßen Pelletieranlage,
Fig.6 eine Darstellung einer Ausführungsform eines Produktionsmoduls,
Fig.7 eine Darstellung einer Ausführungsform eines Produktionsmoduls, das durch ein Stiegenmodul erweitert wurde,
Fig.8 eine Darstellung einer Ausführungsform eines Produktiomsmoduls, das durch ein weiteres Produktionsmodul sowie ein Stiegenmodul, erweitert wurde,
Fig.9 eine Darstellung einer Ausführungsform eines Produktionsmoduls, das durch ein Lagermodul sowie ein Stiegenmodul erweitert wurde, und die
Fig.10 eine Darstellung einer Ausführungsform eines Produktionsmoduls, das durch ein weiteres Produktionsmodul, ein Stiegenmodul, sowie ein Lagermodul erweitert wurde.

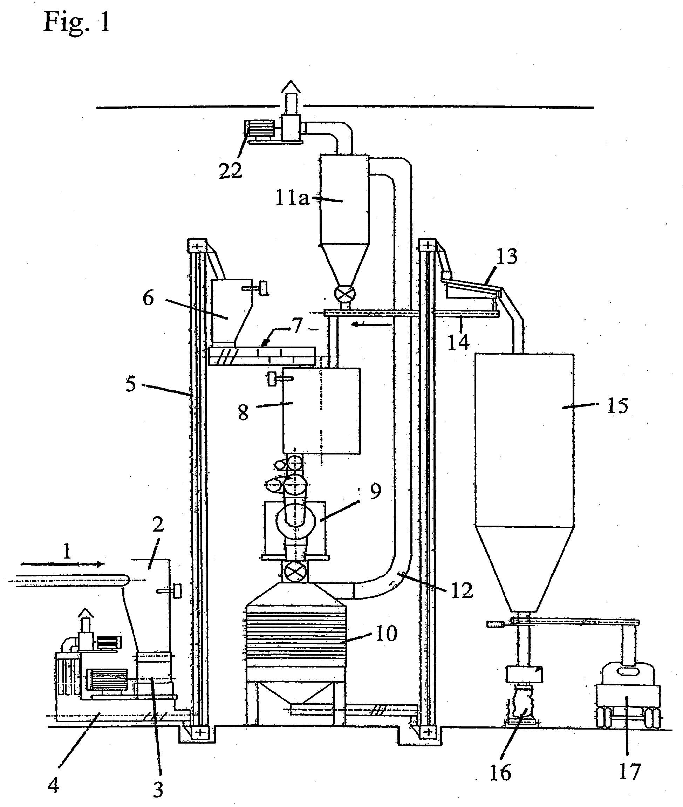

Anhand der Fig.1, die eine schematische Darstellung einer Pelletieranlage gemäß dem Stand der Technik ohne Rückführung von Abluft zeigt, wird zunächst der prinzipielle Aufbau einer Pelletieranlage beschrieben. Das Holzgut, zumeist Holzabfälle eines holzverarbeitenden Betriebes wie etwa Säge- und Hobelspäne, Hackschnitzel oder Holzschreddergut, wird aus einem Lagersilo (in der Fig.1 nicht dargestellt) über eine Zuliefereinrichtung 1, wie etwa eine Schüttgosse, einen Kettenförderer oder einen Elevator, in einen Zwischensilo 2 gefördert und dort zwischengelagert. Für die Herstellung hochqualitativer Pellets muss das Holzgut, bestimmte Bedingungen hinsichtlich Temperatur, Größenverteilung und Feuchtegehalt erfüllen. Der Feuchtegehalt des Holzgutes sollte etwa nicht über 15% liegen, andernfalls ist etwa vor der Zubringung in den Zwischensilo 2 eine Trocknung des Holzgutes notwendig.

Falls die Größenverteilung des Holzgutes zu inhomogen ist, etwa aufgrund enthaltener Kapstücke oder zu großer Hobelspäne, kann eine Zerkleinerungseinrichtung 3, etwa eine Hammermühle 3, vorgesehen sein. Die Hammermühle 3 wird vom Zwischensilo 2 über eine Dosierschnecke beschickt. Beim Zermahlvorgang wird Wärme frei, wobei etwa ein Drittel bis ein Viertel der Antriebsleistung für die Mühle in Wärmeenergie umgesetzt wird. Diese Wärme muss abgeführt werden, zumeist über einen Luftstrom, da ansonsten die Mühle 3 überhitzen kann.

Als Alternative zur Verkleinerung des Holzgutes könnten größere Anteile auch ausgesiebt werden, was aber letztendlich teurer und komplizierter ist. Je homogener das Holzgut in der Größenverteilung seiner Bestandteile ist, desto qualitativer werden die daraus erzeugten Pellets sein. Optional kann vor der Zufuhr in die Zerkleinerungseinrichtung 3 auch eine Metallauslese vorgesehen sein.

Das zerkleinerte Holzgut wird einer Aufgabestelle 4 zugeführt, von wo es über eine Transporteinrichtung 5, etwa eine pneumatische Saugeinrichtung, in einen Vorbehälter 6 transportiert wird. Dieser Vorbehälter 6 stellt ein Vorratsdepot dar, von dem das zerkleinerte Holzgut dosiert, etwa über eine Dosierschnecke, in einen nachgeordneten Konditioneur 7 eingebracht wird. Der Konditioneur 7, etwa ein Paddelmischer mit vorzugsweise verstellbaren Paddeln, dient dazu, den Wassergehalt des zerkleinerten Holzgutes einzustellen und für den nachfolgenden Pressvorgang zu optimierten. Hierzu wird Wasser oder Wasserdampf, und gegebenenfalls auch Maisstärke, zugesetzt, und mit dem zerkleinerten Holzgut gut durchmischt. Das zugesetzte Wasser dient dabei als Schmier- und Bindemittel, wobei der Wasserzusatz den Energieverbrauch, die entstehende Reibungswärme, sowie die Qualität der erzeugten Pellets stark beeinflusst. Ferner wird auch die Brandgefahr stark verringern. Bei einer Pelletierung ohne Wasser und zu dicker Matrize können die Pellets mitunter so heiß werden, dass es zum Verkohlen der Pellets kommen kann. Eine genaue Kontrolle und Steuerung des Wassergehalts der Wasser-Holzgut-Mischung im Konditioneur 7 ist daher entscheidend, wobei nicht nur die Wasserzugabe, sondern auch die Verweildauer der Wasser-Holzgut-Mischung im Konditioneur 7 variierbar ist. Vorteilhaft sind auch Einrichtungen zur Feuchtemessung am Vorbehälter 6 und im Konditioneur 7.

Die Wasser-Holzgut-Mischung füllt nach der Vorbefeuchtung im Konditioneur 7 in einen Reifebehälter 8, in dem die Mischung für etwa 15-30 Minuten zwischengelagert wird. Diese "Reifiezeit" dient dazu, dass die zugemischte Feuchtigkeit gleichmäßig in das Holzgut eindringen kann. Dabei beeinflusst die Homogenität der Wasseraufnahme sowie der Verteilung der Feuchtigkeit in der Wasser-Holzgut-Mischung entscheidend die Qualität der erzeugten Pellets. Das Produkt wird vom Reifebehälter 8 über eine Dosierschnecke in die Pelletpresse 9 gefördert, die zumeist auch mit einer Niveauregelung versehen ist.

In der Presse 9 findet der eigentliche Pelletiervorgang statt, wobei spezielle Rollen (Koller) die Wasser-Holzgut-Mischung durch die Bohrungen einer rotierenden und vertikal angeordneten Ringmatrize pressen. Der Durchmesser der Bohrungen und die Kanallänge können den Anforderungen an das Roh- und Endprodukt angepasst werden, werden aber in der Regel so gewählt, dass sich Pellets von etwa 6 mm ergeben. Am Ausgang der Matrize werden die Pellets auf die gewünschte Länge abgeschnitten, in der Regel auf 10-30 mm. Der Speiser/Mischer über der Pelletpresse 9 dient zur Dosierung der Presse 9, sowie als weitere Möglichkeit zur Zugabe von Wasser. Die Pelletpresse 9 kann auch mit einer lastabhängigen, automatischen Regelung versehen sein, sodass die Presse 9 ohne direkte Bedienung arbeiten kann.

Die produzierten Pellets werden in einem Kühler 10 gekühlt, da bei der Pelletierung große Wärmemengen frei werden. Der Kühler 10 kann etwa ein Schacht- oder Bandkühler sein. Er kühlt die Pellets, die die Presse 9 mit einer Temperatur von etwa 90°C verlassen, auf Umgebungstemperatur ab. Dabei wird den Pellets das zuvor zugesetzte Wasser mittels der Kühlluft, die durch die wärmeabgabe der Pellets erwärmt und somit zur erhöhten Wasseraufnahme fähig ist, im Gegenstrom entzogen. Die Kühlluft stellt staubbehafteter Prozessluft dar, die nicht an die Umwelt abgegeben werden kann. Sie wird daher, etwa mithilfe einer pneumatischen Saugeinrichtung 12, über eine Entstaubungseinrichtung 11a geleitet, die den in der Prozessluft enthaltenen Feinstaub abscheidet und weitestgehend staubfreie Abluft abgibt. Bei der Entstaubungseinrichtung 11a kann es sich etwa über einen Zyklonenentstauber handeln, es wären aber auch andere Arten der mechanischen Entstaubung, oder auch andere Abscheidertypen wie etwa Filtrationsentstaubung oder Elektroentstaubung denkbar.

Die gekühlten Pellets werden über einen Ventilator dem Sieb 13 zugeführt, und hier von Feinanteilen und Obergrößen getrennt. Die abgesiebten Feinanteile werden über die Fördereinrichtung 14 zurück in die Anlage gefördert, und die Pellets über einen mechanischen oder pneumatischen Transport einem Verlade- oder Absacksilo 15 zugeführt. Die Pellets sind nun fertig für eine Verpackung in Säcken mithilfe einer Absackeinrichtung 16, für den weiteren Transport zum Kunden mithilfe einer Abfüllanlage 17, oder für einen unmittelbaren Verbrauch.

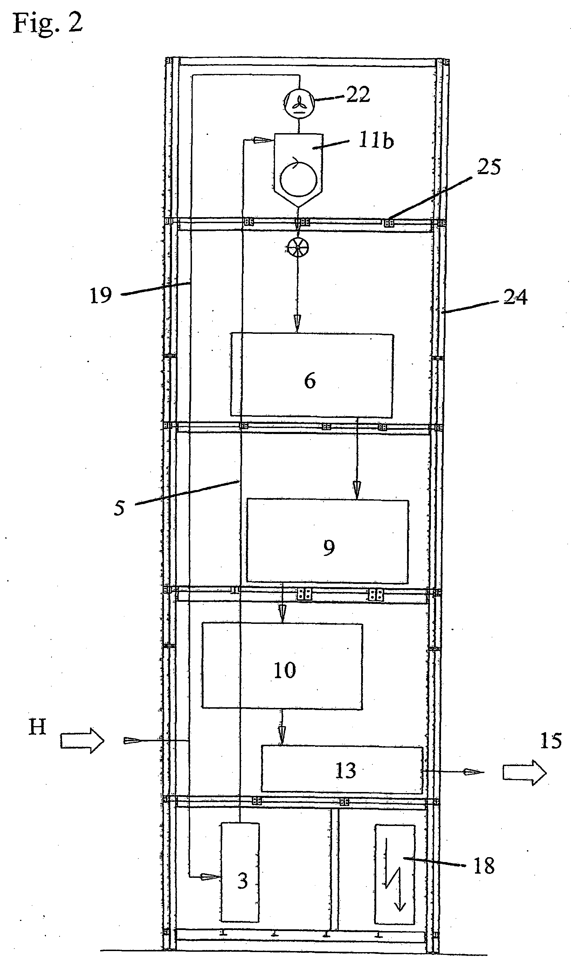

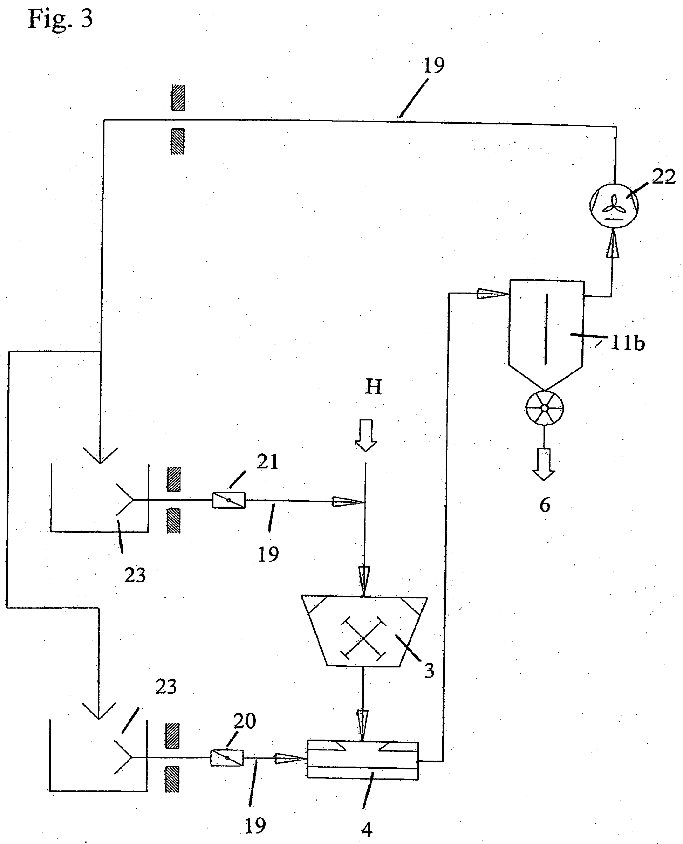

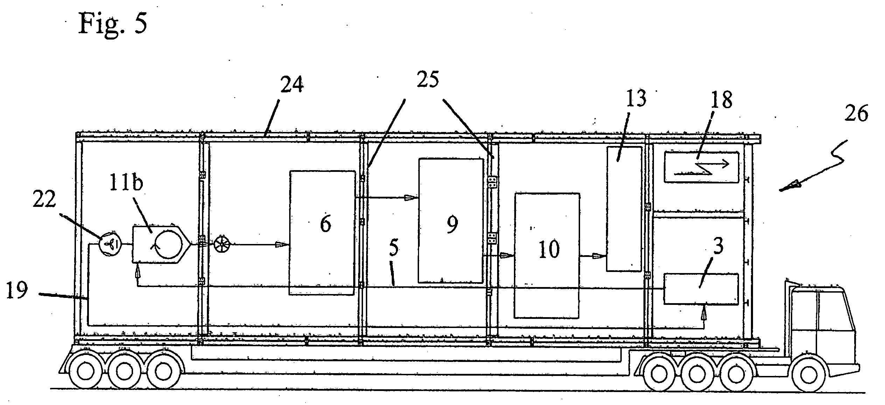

Zusätzlich oder alternativ zur Entstaubungseinrichtung 11a kann etwa auch eine weitere Entstaubungseinrichtung 11b vor dem Vorbehälter 6 angeordnet sein, der ebenfalls als Zyklonenentstauber ausgeführt sein kann. Eine solche Anordnung ist in den Fig.2, 3 und 5 dargestellt, wobei in der Fig.3 die der Entstaubungseinrichtung 11b nachfolgenden Anlagenteile weggelassen wurden, und nur mit dem Pfeil Richtung Vorbehälter 6 angedeutet sind. Die Fig.2 und 5 zeigt hierbei eine Pelletieranlage, bei der das zerkleinerte Holzgut zunächst einer Zerkleinerungseinrichtung 3, etwa eine Hammermühle, zugeführt wird, und in weiterer Folge der Entstaubungseinrichtung 11b. Die weiteren Pelletierschritte sind lediglich überblicksmäßig gezeigt, so sind in der Fig.2 und 5 etwa die Zwischenlagerung in einem Vorbehälter 6, der Pressvorgang in der Pelletspresse 8, die Kühlung im Kühler 10, die Siebung mit Sieb 13, sowie der Austrag der fertigen Pellets in den Verlade- oder Absacksilo 15 angedeutet. Zusätzlich zeigt die Fig.2 auch ein Steuermodul 18 zur Steuerung der Pelletieranlage.

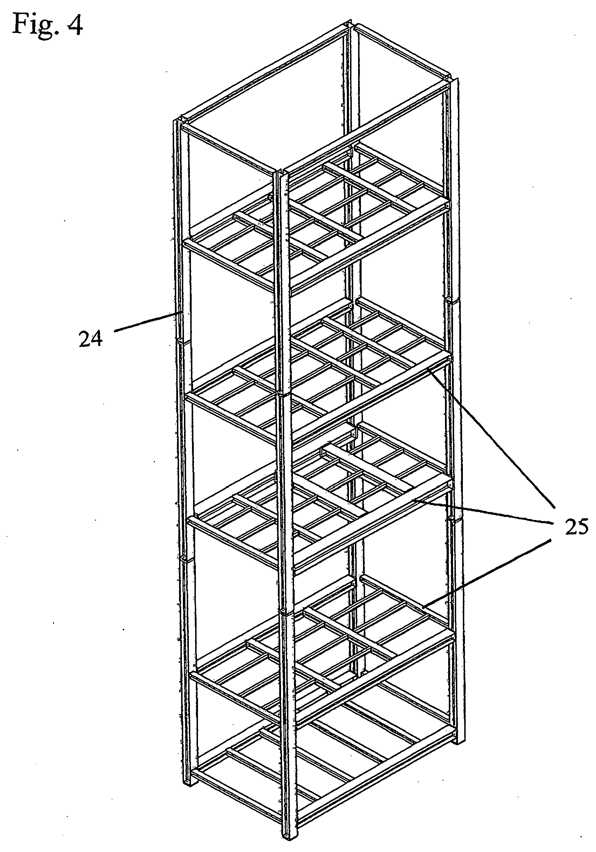

Mithilfe der Fig.2 kann eine Ausführungsform einer erfindungsgemäßen Pelletieranlage gut erläutert werden. Hierbei ist ein Rahmengerüsts 24 mit am Rahmengerüst 24 montierten Trageplatten ober -gitter 25 zur Befestigung von Vorbehälter 6, Presse 9, Kühler 10 und der zumindest einen Entstaubungseinrichtung 11 in einer zueinander räumlich fixierten Lage vorgesehen, wobei am Rahmengerüsts 24 Verkleidungsplatten befestigbar sind. Die unterschiedlichen Anlagenteile können dabei im Rahmengerüst 24 neben- oder untereinander angeordnet sein. Ein mögliches Ausführungsbeispiel eines solchen Rahmengerüsts 24 ist in der Fig.4 dargestellt. In einer erweiterten Ausführungsform können am Rahmengerüst 24 auch Trageplatten oder -gitter 25 zur Befestigung eines Siebes 13 und einer Zerkleinerungseinrichtung 3 vorgesehen sein. Werden diese Ausführungsformen durch alle anderen, zur Pelletierung vorteilhaften Einrichtungen, wie einem Konditioneur 7 und einem Reifebehälter 8, ergänzt, steht ein komplettes Produktionsmodul 26 zur Verfügung, das mithilfe der Befestigung am Rahmengerüst 24 in seiner Gesamtheit transportiert werden kann. Die Transportfähigkeit des Produktionsmoduls 26 ist etwa in der Fig.5 dargestellt, wo die Pelletieranlage in ihrer Gesamtheit auf einem Sattelschlepper gelagert ist, um auf diese Weise an ihr Zielort gebracht zu werden.

Das Rahmengerüst 24 stellt somit das Grundgerüst eines Gehäuses dar, in dem die für eine Pelletieranlage relevanten Anlagenteile ortsfest gehalten sind. Diese Anlagenteile sind somit durch entsprechendes Hantieren des Rahmens 24 transportabel. Die Befestigbarkeit von Verkleidungsplatten 29 am Rahmengerüsts 24 legt auch die Ausführung des Rahmengerüsts 24 relativ zu den an ihm befestigten Anlagenteilen fest, insbesondere muss das Rahmengerüst 24 die an ihm befestigten Anlagenteile wie Vorbehälter 6, Presse 9 oder Kühler 10 zumindest teilweise überragen, sodass sie durch die am Rahmengerüst 24 befestigten Verkleidungsplatten 29 weitestgehend abgedeckt werden können. Das hat den Vorteil, dass die erfindungsgemäße Vorrichtung aufgrund der Verkleidung weitestgehend geschützt vor Witterungseinflüssen ist, und somit keine weitere Gebäudeinfrastruktur benötigt. Stattdessen ist die erfindungsgemäße Vorrichtung lediglich auf einem hierfür vorgesehenen, vorzugsweise betonierten Fundament auf- bzw. abzustellen.

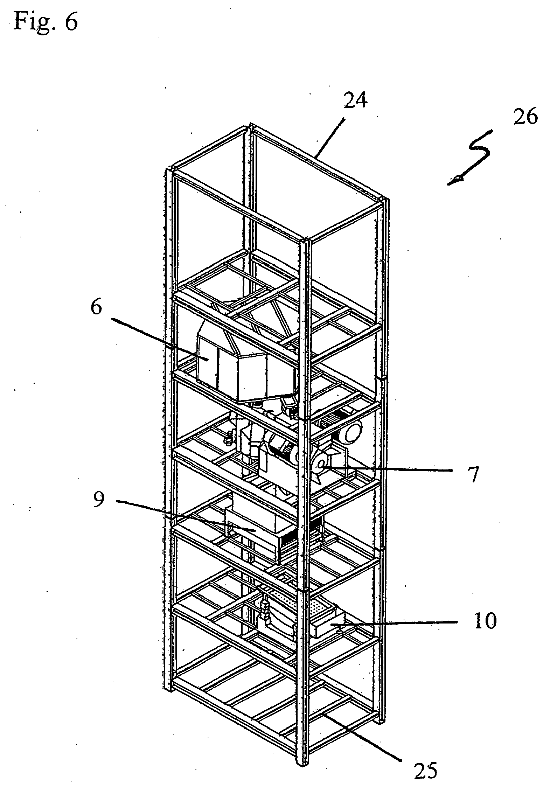

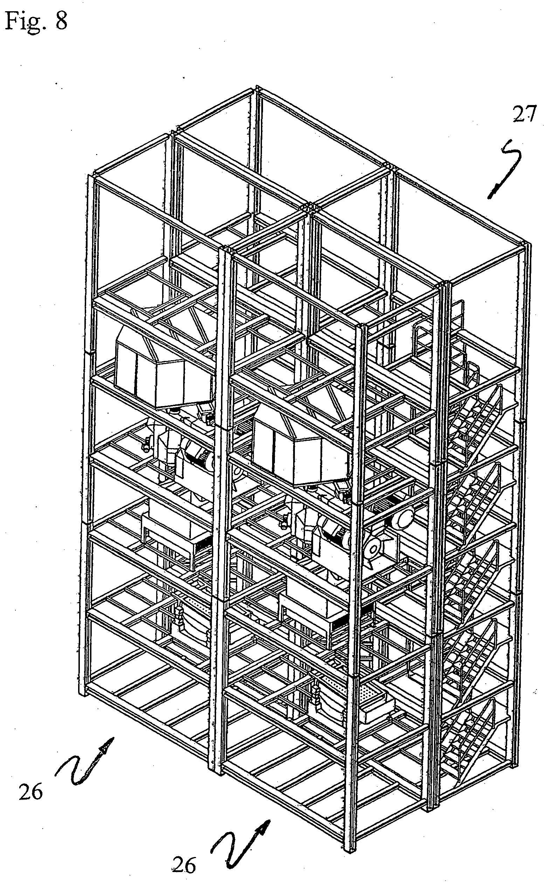

Das Rahmengerüst 24 und die an ihm befestigten Anlagenteile stellen somit ein transportables Produktionsmodul 26 mit vorgegebener Verarbeitungsmenge dar, wobei bei Bedarf auch mehrere dieser Produktionsmodule 26 kombiniert werden können, um die Verarbeitungsmenge auf diese Weise zu erhöhen, ohne die Anlagenteile eines Produktionsmoduls 26 in ihrer Dimensionierung zu verändern. In der Fig.8 ist etwa dargestellt, wie zwei Produktionsmodule 26 miteinander verbunden werden können, um so eine Pelletieranlage mit doppelter Kapazität zu schaffen. Hierbei besteht ein Produktionsmodul 26, wie insbesondere auch in der Fig.6 dargestellt ist, aus einem Rahmengerüst 24 mit am Rahmengerüst 24 montierten Trageplatten oder -gitter 25 zur Befestigung von Vorbehälter, 6, Konditioneur 7, Presse 9 und dem Kühler 10 in einer zueinander räumlich fixierten Lage, wobei am Rahmengerüst 24 wiederum Verkleidungsplatten 29 befestigbar sind. Vor dem Vorbehälter 6, also mit Bezug auf die Fig.6 am obersten Tragegitter 25, könnte auch eine Entstaubungseinrichtung 11b angeordnet sein. In einer erweiterten Ausführungsform können am Rahmengerüst 24 auch Trageplatten oder -gitter 25 zur Befestigung eines Siebes 13 und einer Zerkleinerungseinrichtung 3 vorgesehen sein.

Die Darstellung der Fig.6 soll dabei ein komplettes, funktionstüchtiges Produktionsmodul 26 andeuten, das mithilfe der Befestigung am Rahmengerüst 24 in seiner Gesamtheit transportiert werden kann. Dieses Produktionsmodul 26 ist nun in vielfältiger Weise mit anderen Modulen kombinierbar, wie im Folgenden gezeigt werden soll.

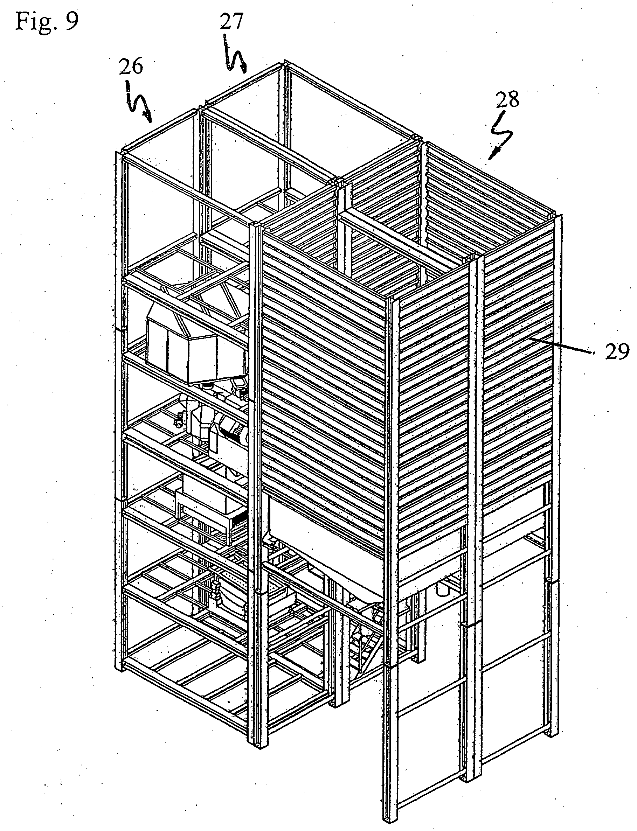

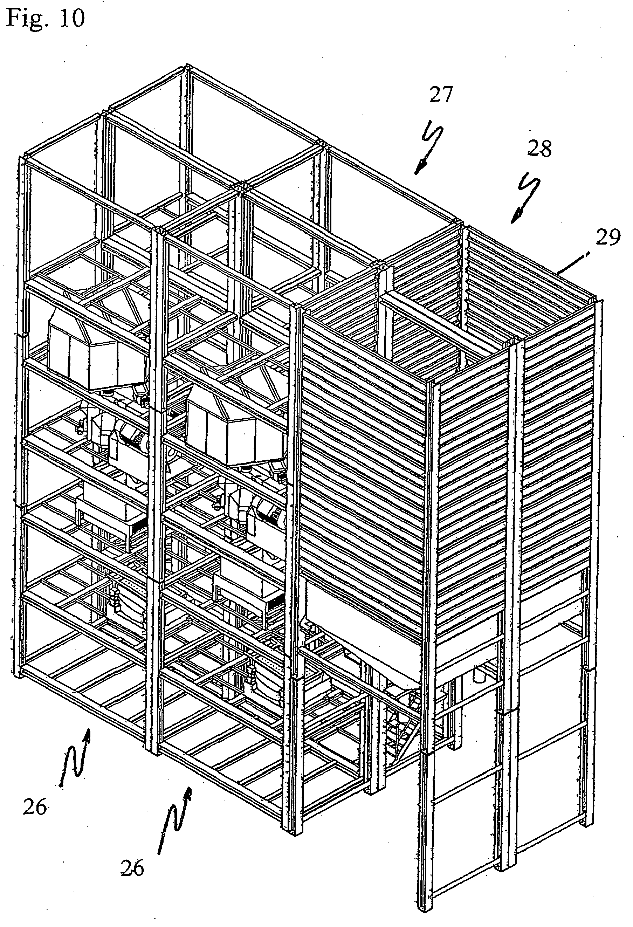

Ist zusätzlich oder Abgabestelle eine Abfüll- oder Absackeinrichtung 16,17 für die erzeugten Pellets nachgeordnet, so kann etwa auch die Abfüll- oder Absackeinrichtung 16,17 in einem Modulrahmen gehalten sein, wobei der Modulrahmen mit dem Rahmengerüsts 24 verbindbar ist. Alternativ oder ergänzend zu einem solchen Modulrahmen kann auch vorgesehen sein, dass das Rahmengerüst 24 mit einem Lagermodul 28 zur Zwischenlagerung der erzeugten Pellets verbindbar ist, wie das in den Fig. 9 und 10 in Form eines Verlade- oder Absacksilos 15 dargestellt ist. Im Lagermodul 28 könnten aber auch zusätzlich eine Absackeinrichtung 16 oder eine Abfüllanlage 17 integriert sein.

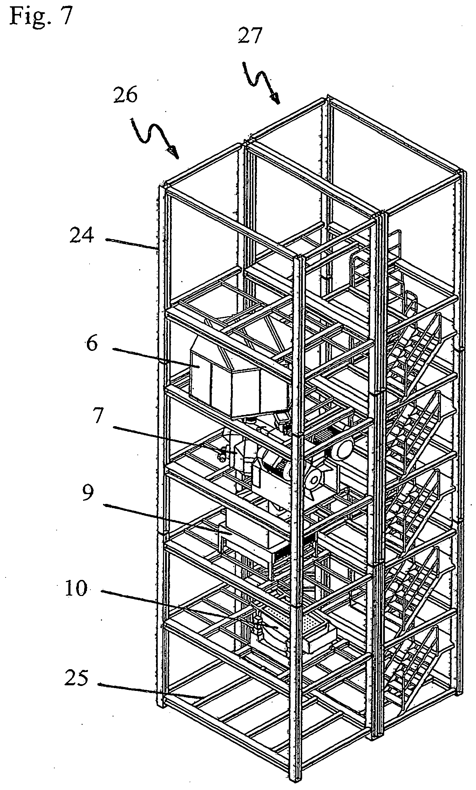

Insbesondere bei größeren Anlagen, etwa bei Verarbeitungsmengen von über 1000 kg/h, erweist es sich als vorteilhaft, wenn das Rahmengerüst 24 mit einem Stiegenmodul 27 als Zugang zu den am Rahmengerüst 24 montierten Trägeplatten oder -gitter 25 verbindbar ist, wie in den Fig.7-10 dargestellt ist. Dadurch kann ein einfacher Zugang zu allen Anlagenteilen für notwendige Wartungs- oder Überwachungsarbeiten gewährleistet werden.

Die an den Trageplatten oder -gitter 25 montierten Anlagenteile Vorbehälter 6, Presse 9, Konditioneur 7, Kühler 10, sowie die zumindest eine Entstaubungseinrichtung 11 sind in vorteilhafter Weise bereits in ein elektrisches Netzwerk eingebunden, das über eine Schnittstelle von außerhalb des Rahmengerüsts 24 zugänglich ist. Durch diese Vorvernetzung aller Anlagenteile kann erreicht werden, dass die Anlage beim Betreiber über die Schnittstelle sofort in Betrieb genommen werden kann.

In einer erweiterten Ausführungsform können am Rahmengerüsts 24 auch zusätzliche Trageplatten oder -gitter 25 zur Befestigung eines Siebes 13 und einer Zerkleinerungseinrichtung 3 vorgesehen sein. Werden diese Ausführungsformen durch alle anderen, zur Pelletierung vorteilhafter Einrichtungen, wie einem Konditioneur 7 und einem Reifebehälter 8, ergänzt, steht ein komplettes Produktionsmodul 26 zur Verfügung, das mithilfe der Befestigung am Rahmengerüst 24 in seiner Gesamtheit transportiert werden kann. Das Produktionsmodul 26 stellt somit im bevorzugten Fall eine vollständig betriebsfertige Anlage dar, die lediglich durch optionale Module, wie jene für die Abfüll- oder Absackeinrichtung 16, 17, dem Lagermodul 28 oder dem Stiegenmodul, 27, ergänzt werden kann. Ein solches Produktionsmodul, 26 lässt sich beim holzverarbeitenden Betrieb schnell und preisgünstig aufstellen, ohne dass zuerst kosten- und zeitintensiv Gebäudeinfrastruktur geschaffen werden muss.

Mithilfe der Fig.2 kann auch eine Ausführungsform einer bevorzugten Pelletieranlage gut erläutert werden. Diese Ausführungsform wird anhand einer erfindungsgemäßen, modularen Ausführung einer Pelletieranlage dargestellt, es wäre aber auch denkbar, dass eine Ausführungsform wie im Folgenden beschrieben auch auf herkömmliche Pelletieranlagen angewendet werden kann, und auch in diesen Anwendungsfällen Vorteile bieten kann. Wesentliches Element ist hierbei die Rückführung 19, die die in der Entstaubungseinrichtung 11b abgetrennte Abluft mithilfe eines Ventilators 22 der Mühle 3 bzw. dem der Anlage zugeführten, zerkleinerten Holzgut rückführt. Da beim Zermahlungsvorgang in der Mühle 3 Wärme frei wird, weist die in der Rückführung 19 transportierte Abluft eine erhöhte Temperatur auf. Mit dieser erwärmten Abluft kann einerseits das zugeführte Holzgut H angewärmt und, falls notwendig, getrocknet werden, andererseits kann sie aber auch zur Unterstützung des Lüftstroms zur Kühlung der Mühle 3 verwendet werden. Dabei ist aber darauf zu achten, dass das Holzgut nicht zu stark erwärmt wird, um jegliche Entzündungsgefahr zu vermeiden, und um die Transportfähigkeit nicht zu beeinträchtigen. Wird das Holzgut nämlich pneumatisch transportiert, erwärmt das Holzgut auch die Prozessluft, deren Transportfähigkeit aber bei zu starker Erwärmung abnimmt. Andererseits ist auch darauf zu achten, dass die Temperatur jener Abluft, die in die Mühle 3 rückgeführt wird, überwacht und die Menge der zugeführten Abluft gegebenenfalls reguliert wird. Daher wird es vorteilhaft sein, über Regeleinrichtungen 20, 21, wie etwa Schieber, Klappen, Ventile und dergleichen, sowie pneumatische Schnittstellen 23 die Menge der dem zerkleinerte Holzgut, und der Mühle 3 zugeführten Abluft in der Rückführung 19 steuerbar zu gestalten (siehe Fig.3). Hierzu empfehlen sich auch entsprechende Mess- und Überwachungseinrichtungen, wie z.B. Temperaturfühler. Selbstverständlich kann ein Teil der Abluft aus der Entstaubungseinrichtung 11b nach wie vor auch an die Umgebung angegeben werden, sofern dies die Prozeßführung verlangt.

Zusätlich zu der in den Fig.2 und 3 gezeigten Rückführung von Abluft aus der Entstaubungseinrichtung 11b könnte auch eine Rückführung aus der Entstaubungseinrichtung 11a vorgesehen sein (in den Fig.1 bis 3 nicht dargestellt). Des Weiteren könnte auch eine zusätzliche, zentrale Entstaubungseinrichtung vorgesehen sein (in den Fig.1 bis 3 nicht dargestellt), in die die Abluft von mehreren, über die Anlage verteilten Entstaubungseinrichtungen zusammengeführt wird, und von dieser zentralen Entstaubungseinrichtung eine Rückführung von Abluft in die Aufgabestelle 4 und/oder in die Zerkleinerungseinrichtung 3 vorgenommen werden.

Des Weiteren ist die Rückführung der Abluft aus Entstaubungseinrichtungen 11 auch dann vorteilhaft, wenn keine Zerkleinerungseinrichtung 3 vorgesehen ist. In diesem Fall erfolgt die Rückführung der Abluft lediglich in die Aufgabestelle 4, wo eine Anwärmung und Trocknung des zerkleinerten Holzgutes vorgenommen werden kann.

Die erfindungsgemäße Vorrichtung zur Herstellung von Holzpellets ist somit einfach und preiswert in ihrer Errichtung sowie ihrem weiteren Betrieb, und zudem transportabel. Die erfindungsgemäße Vorrichtung ist dabei leicht an neue Erfordernisse, wie etwa geänderte Verarbeitungsmengen, adaptierbar. Des Weiteren verfügt sie in einer bevorzugten Ausführungsform über erweiterte Prozessführungsmöglichkeiten, wobei insbesondere zusätzliche Maßnahmen zur Trocknung und Anwärmung des Holzgutes, sowie für einen optimierten Betrieb der Zerkleinerungseinrichtung 3 ermöglicht werden.

## Patentansprüche

1. Vorrichtung zur Herstellung von Holzpellets mit einer Aufgabestelle (4) für zerkleinertes Holzgut, einem Vorbehälter (6) zur Zwischenlagerung des zerkleinerten Holzgutes, einer Presse (9) zur Erzeugung von Pellets aus dem zerkleinerten Holzgut, einem Kühler (10) zum Abkühlen der gepressten Pellets, einem dem Kühler (10) nachgeordneten Abgabestelle für die erzeugten Pellets, zumindest einer Entstaubungseinrichtung (11a, 11b) zur Trennung staubbehafteter Prozessluft in Feinstaub und Abluft sowie mit einer Zerkleinerungseinrichtung (3) zur Zerkleinerung von Holzgut, **dadurch gekennzeichnet, dass** ein Rahmengerüst (24) mit am Rahmengerüst (24) montierten Trageplatten oder -gitter (25) zur Befestigung von Vorbehälter (6), Presse (9), Kühler (10) und der zumindest einen Entstaubungseinrichtung (11a, 11b) in einer zueinander räumlich fixierten Lage vorgesehen sind, wobei am Rahmengerüst (24) Verkleidungsplatten (29) befestigbar sind und wobei das Rahmengerüst (24) die an ihm befestigten Anlagenteile zumindest teilweise überragt, sodass sie durch die am Rahmengerüst (24) befestigten Verkleidungsplatten (29) abgedeckt werden können, und dass der Vorbehälter (6), die Presse (9), der Kühler (10) und die zumindest eine Entstaubungseinrichtung (11a,11b) durch entsprechendes Hantieren des Rahmengerüsts (24) in ihrer räumlich zueinander fixierten Lage transportabel sind.

2. Vorrichtung zur Herstellung von Holzpellets nach Anspruch 1, wobei der Abgabestelle eine Abfüll- oder Absackeinrichtung (16,17) für die erzeugten Pellets nachgeordnet ist, dadurch gekenntzeichnet, dass die Abfüll- oder Absackeinrichtung (16,17) in einem Modulrahmen gehalten ist, der mit dem Rahmengerüst (24) verbindbar ist.

3. Vorrichtung zur Herstellung von Holzpellets nach Anspruch 1 oder 2, **dadurch gekennzeichnet, dass** das Rahmengerüst (24) mit einem Lagermodul (28) zur Zwischenlagerung der erzeugten Pellets verbindbar ist.

4. Vorrichtung zur Herstellung von Holzpellets nach einem der Ansprüche 1 bis 3, **dadurch gekennzeichnet, dass** das Rahmengerüsts (24) mit einem Stiegenmodul (27) als Zugang zu den am Rahmengerüst (24) montierten Trageplatten oder -gitter (25) verbindbar ist.

5. Vorrichtung zur Herstellung von Holzpellets nach einem der Ansprüche 1 bis 4, **dadurch gekennzeichnet, dass** die an den Trageplatten oder -gitter (25) montierten Anlagenteile Vorbehälter (6), Presse (9), Kühler (10) und die zumindest eine Entstaubungseinrichtung (11a, 11b) in ein elektrisches Netzwerk eingebunden sind, das über eine Schnittstelle von außerhalb des Rahmengerüsts (24) zugänglich ist.

6. Vorrichtung zur Herstellung von Holzpellets nach einem der Ansprüche 1 bis 5, **dadurch gekennzeichnet, dass** am Rahmengerüst (24) zusätzliche Trageplatten oder -gitter (25) zur Befestigung eines Siebes (13) und der Zerkleinerungseinrichtung (3) vorgesehen sind.

7. Vorrichtung zur Herstellung von Holzpellets nach einem der Ansprüche 1 bis 5, **dadurch gekennzeichnet, dass** eine Rückführung (19) für die Abluft von der zumindest einen Entstaubungseinrichtung (11a, 11b) in die Aufgabestelle (4) vorgesehen ist.

8. Vorrichtung zur Herstellung von Holzpellets nach einem der Ansprüche 1 bis 7, **dadurch gekennzeichnet, dass** eine Entstaubungseinrichtung (11a) dem Kühler (10) nachgeordnet und mit dem Kühler (10) verbunden ist.

9. Vorrichtung zur Herstellung von Holzpellets nach Anspruch 8, **dadurch gekennzeichnet, dass** eine pneumatische Saugeinrichtung (12) zwischen dem Kühler (10) und der Entstaubungseinrichtung (11a) zum Transport der Prozessluft vom Kühler (10) in die Entstaubungseinrichtung (11a) vorgesehen ist.

10. Vorrichtung zur Herstellung von Holzpellets nach einem der Ansprüche 1 bis 9, **dadurch gekennzeichnet, dass** eine Entstaubungseinrichtung (11b) zwischen der Transporteinrichtung (5) und dem Vorbehälter (6) angeordnet ist.

11. Vorrichtung zur Herstellung von Holzpellets nach Anspruch 10, **dadurch gekennzeichnet, dass** es sich bei der Transporteinrichtung (5) um eine pneumatische Saugeinrichtung zum Transport der Prozessluft von der Aufgabestelle (4) in die Entstaubungseinrichtung (11b) handelt.

12. Vorrichtung zur Herstellung von Holzpellets nach einem der Ansprüche 1 bis 11, **dadurch gekennzeichnet, dass** Regeleinrichtungen (20), wie etwa Ventile, Klappen oder Schieber, zur Regelung der der Aufgabestelle (4) zugeführten Abluft vorgesehen sind.

13. Vorrichtung zur Herstellung von Holzpellets nach einem der Ansprüche 1 bis 12, **dadurch gekennzeichnet, dass** es sich bei der zumindest einen Entstaubungseinrichtung (11a, 11b) um einen Zyklonenentstauber handelt.

14. Vorrichtung zur Herstellung von Holzpellets nach einem der Ansprüche 1 bis 13, **dadurch gekennzeichnet, dass** eine Rückführung (19) für die Abluft von der zumindest einen Entstaubungseinrichtung (11a, 11b) in die Zerkleinerungseinrichtung (3) vorgesehen ist.

15. Vorrichtung zur Herstellung von Holzpellets nach Anspruch 14, **dadurch gekennzeichnet, dass** Regeleinrichtungen (21), wie etwa Ventile, Klappen oder Schieber, zur Regelung der der Zerkleinerungs-einrichtung (3) zugeführten Abluft vorgesehen sind.

16. Vorrichtung zur Herstellung von Holzpellets nach einem der Ansprüche 1 bis 15, **dadurch gekennzeichnet, dass** es sich bei der Zerkleinerungseinrichtung (3) um eine Hammermühle handelt.

## Claims

1. An apparatus for producing wood pellets, comprising a feed point (4) for crushed wood material, a hopper (6) for the intermediate storage of the crushed wood material, a press (9) for producing pellets from the crushed wood material, a cooler (10) for cooling the pressed pellets, a delivery point for the crushed pellets which is situated downstream of the cooler (10), at least one dedusting device (11a, 11b) for separating dust-laden process air into fine dust and exhaust air, and a crushing device (3) for crushing wood material, **characterized in that** a frame structure (24) is provided, having carrier plates or racks (25) mounted on the frame structure (24) for fixing the hopper (6), the press (9), the cooler (10) and the at least one dedusting device (11a, 11b) in a position which is spatially fixed with respect to each other, wherein cladding panels (29) can be fixed to the frame structure (24), and wherein the frame structure (24) protrudes at least partly beyond the plant components attached thereto, so that they can be covered by the cladding panels (29) fixed to the frame structure (24), and that the hopper (6), the press (9), the cooler (10) and the at least one dedusting device (11a, 11b) are portable with respect to their mutually spatially fixed position by respective handling of the frame structure (24).

2. An apparatus for producing wood pellets according to claim 1, wherein a filling or bagging device (16, 17) for the produced pellets is situated downstream of the delivery point, **characterized in that** the filling or bagging device (16, 17) is held in a module frame which is connectable to the frame structure (24).

3. An apparatus for producing wood pellets according to claim 1 or 2, **characterized in that** the frame structure (24) is connectable to a storage module (28) for the intermediate storage of the produced pellets.

4. An apparatus for producing wood pellets according to one of the claims 1 to 3, **characterized in that** the frame structure (24) is connectable to a staircase module (27) as access to the carrier plates or racks (25) which are mounted on the frame structure (24).

5. An apparatus for producing wood pellets according to one of the claims 1 to 4, **characterized in that** the plant components of hopper (6), press (9), cooler (10) and the at least one dedusting device (11a, 11b), which are mounted on the carrier plates or racks (25), are integrated in an electrical network which is accessible via an interface from the outside of the frame structure (24).

6. An apparatus for producing wood pellets according to one of the claims 1 to 5, **characterized in that** additional carrier plates or racks (25) for fixing a screen (13) and the crushing device (3) are provided on the frame structure (24).

7. An apparatus for producing wood pellets according to one of the claims 1 to 5, **characterized in that** a return unit (19) is provided for the exhaust air from the at least one dedusting device (11a, 11b) to the feed point (4).

8. An apparatus for producing wood pellets according to one of the claims 1 to 7, **characterized in that** a dedusting device (11a) is provided downstream of the cooler (10) and is connected to the cooler (10).

9. An apparatus for producing wood pellets according to claim 8, **characterized in that** a pneumatic suction device (12) is provided between the cooler (10) and the dedusting device (11a) for transporting the process air from the cooler (10) to the dedusting device (11a).

10. An apparatus for producing wood pellets according to one of the claims 1 to 9, **characterized in that** a dedusting device (11b) is arranged between the transport device (5) and the hopper (6).

11. An apparatus for producing wood pellets according to claim 10, **characterized in that** the transport device (5) concerns a pneumatic suction device for transporting the process air from the feed point (4) to the dedusting device (11b).

12. An apparatus for producing wood pellets according to one of the claims 1 to 11, **characterized in that** control devices (20) such as valves, flaps or sliders are provided for controlling the exhaust air supplied to the feed point (4).

13. An apparatus for producing wood pellets according to one of the claims 1 to 12, **characterized in that** the at least one dedusting device (11a, 11b) concerns a cyclone deduster.

14. An apparatus for producing wood pellets according to one of the claims 1 to 13, **characterized in that** a return unit (19) is provided for the exhaust air from the at least one dedusting device (11a, 11b) to the crushing device (3).

15. An apparatus for producing wood pellets according to claim 14, **characterized in that** control devices (21) such as valves, flaps or sliders are provided for controlling the exhaust air supplied to the crushing device (3).

16. An apparatus for producing wood pellets according to one of the claims 1 to 15, **characterized in that** the crushing device (3) concerns a hammermill.

## Revendications

1. Dispositif pour la fabrication de pastilles de bois avec un point d'admission (4) pour du bois haché, un réservoir d'amont (6) pour l'entreposage du bois haché, une presse (9) pour produire des pastilles à partir du bois haché, un refroidisseur (10) pour refroidir les pastilles pressées, un point de dépose des pastilles produites situé en aval du refroidisseur (10), au moins un dispositif de dépoussiérage (11a, 11b) pour la séparation de l'air de processus de poussière sujettes en des poussières fines et en l'air de sortant ainsi qu'avec un dispositif de hachage (3) pour hacher le bois, **caractérisé en ce qu'**un châssis de cadre (24) avec des plaques ou grilles de support (25) montées sur le châssis de cadre (24) est prévu pour la fixation du réservoir d'amont (6), de la presse (9), du refroidisseur (10) et de l'au moins un dispositif de dépoussiérage (11a, 11b) dans une position fixe dans l'espace les uns par rapport aux autres, des plaques d'habillage (29) pouvant être fixées au châssis de cadre (24) et le châssis de cadre (24) dépassant au moins partiellement les parties d'installation qui sont fixées à lui de sorte qu'elles peuvent être couvertes par les plaques d'habillage (29) fixées au châssis de cadre (24), et **en ce que** le réservoir d'amont (6), la presse (9), le refroidisseur (10) et l'au moins un dispositif de dépoussiérage (11a, 11b) sont transportables dans leur position fixe dans l'espace les uns par rapport aux autres par une manipulation correspondante du châssis de cadre (24).

2. Dispositif pour la fabrication de pastilles de bois selon la revendication 1, dans lequel le point de dépose est suivi d'un dispositif de remplissage ou d'ensachage (16, 17) pour les pastilles produites, **caractérisé en ce que** le dispositif de remplissage ou d'ensachage (16, 17) est retenu dans un cadre modulaire qui peut être assemblé au châssis de cadre (24).

3. Dispositif pour la fabrication de pastilles de bois selon la revendication 1 ou 2, **caractérisé en ce que** le châssis de cadre (24) peut être relié à un module de stockage (28) pour l'entreposage des pastilles produites.

4. Dispositif pour la fabrication de pastilles de bois selon l'une des revendications 1 à 3, **caractérisé en ce que** le châssis de cadre (24) peut être assemblé avec un module d'escalier (27) servant d'accès au plaques ou grilles de support (25) montées sur le châssis de cadre (24).

5. Dispositif pour la fabrication de pastilles de bois selon l'une des revendications 1 à 4, **caractérisé en ce que** les parties d'installation montées sur les plaques ou grilles de support (25) et comprenant le réservoir d'amont (6), la presse (9), le refroidisseur (10) et l'au moins un dispositif de dépoussiérage (11a, 11b) sont intégrées dans un réseau électrique qui est accessible via une interface depuis l'extérieur du châssis de cadre (24).

6. Dispositif pour la fabrication de pastilles de bois selon l'une des revendications 1 à 5, **caractérisé en ce qu'**il est prévu sur le châssis de cadre (24) des plaques ou grilles de support (25) supplémentaires pour la fixation d'un crible (13) et du dispositif de hachage (3).

7. Dispositif pour la fabrication de pastilles de bois selon l'une des revendications 1 à 5, **caractérisé en ce qu'**il est prévu une conduite de retour (19) pour l'air sortant de l'au moins un dispositif de dépoussiérage (11a, 11b) vers le point d'admission (4).

8. Dispositif pour la fabrication de pastilles de bois selon l'une des revendications 1 à 7, **caractérisé en ce qu'**un dispositif de dépoussiérage (11a) est monté après le refroidisseur (10) et relié au refroidisseur (10).

9. Dispositif pour la fabrication de pastilles de bois selon la revendication 8, **caractérisé en ce qu'**il est prévu un dispositif d'aspiration pneumatique (12) entre le refroidisseur (10) et le dispositif de dépoussiérage (11a) pour le transport de l'air de processus du refroidisseur (10) vers le dispositif de dépoussiérage (11a).

10. Dispositif pour la fabrication de pastilles de bois selon l'une des revendications 1 à 9, **caractérisé en ce qu'**un dispositif de dépoussiérage (11b) est disposé entre le dispositif de transport (5) et le réservoir d'amont (6).

11. Dispositif pour la fabrication de pastilles de bois selon la revendication 10, **caractérisé en ce que** le dispositif de transport (5) est un dispositif d'aspiration pneumatique pour le transport de l'air de processus du point d'admission (4) au dispositif de dépoussiérage (11b).

12. Dispositif pour la fabrication de pastilles de bois selon l'une des revendications 1 à 11, **caractérisé en ce que** des dispositifs de régulation (20) sont prévus, par exemple des vannes, des clapets ou des tiroirs, pour réguler l'air sortant amené au point d'admission (4).

13. Dispositif pour la fabrication de pastilles de bois selon l'une des revendications 1 à 12, **caractérisé en ce que** l'au moins un dispositif de dépoussiérage (11a, 11b) est un dépoussiéreur à cyclone.

14. Dispositif pour la fabrication de pastilles de bois selon l'une des revendications 1 à 13, **caractérisé en ce qu'**il est prévu une conduite de retour (19) de l'air sortant de l'au moins un dispositif de dépoussiérage (11a, 11b) au dispositif de hachage (3).

15. Dispositif pour la fabrication de pastilles de bois selon l'une des revendications 14, **caractérisé en ce que** des dispositifs de régulation (21) sont prévus, par exemple des vannes, des clapets ou des tiroirs, pour réguler l'air sortant amené au dispositif de hachage (3).

16. Dispositif pour la fabrication de pastilles de bois selon l'une des revendications 1 à 15, **caractérisé en ce que** le dispositif de hachage (3) est un concasseur à marteaux.
